Europäisches Patentamt

European Patent Office

Office européen des brevets

(11) Veröffentlichungsnummer : **0 162 140**
**B1**

# (12) EUROPÄISCHE PATENTSCHRIFT

(45) Veröffentlichungstag der Patentschrift :
04.05.88

(21) Anmeldenummer : 84115373.7

(22) Anmeldetag : 13.12.84

(51) Int. Cl.⁴ : **B 01 D 53/26, F 26 B 21/02**

(54) **Vorrichtung zur Erzeugnung eines kontinuierlichen Stromes getrockneten Gases für einen Trocknungstrichter.**

(30) Priorität : 15.02.84 DE 3405260

(43) Veröffentlichungstag der Anmeldung :
27.11.85 Patentblatt 85/48

(45) Bekanntmachung des Hinweises auf die Patenterteilung : 04.05.88 Patentblatt 88/18

(84) Benannte Vertragsstaaten :
DE FR GB IT

(56) Entgegenhaltungen :
DE-A- 2 354 745
US-A- 4 351 649

(73) Patentinhaber : Gräff, Roderich Wilhelm, Dr.-Ing.
Egerländer Strasse 2-4
D-6108 Weiterstadt 2 (DE)

(72) Erfinder : Gräff, Roderich Wilhelm, Dr.-Ing.
Egerländer Strasse 2-4
D-6108 Weiterstadt 2 (DE)

(74) Vertreter : Zinngrebe, Horst, Dr.rer.nat.
Saalbaustrasse 11
D-6100 Darmstadt (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft eine Vorrichtung zur Erzeugung eines kontinuierlichen Stromes getrockneten Gases, vorzugsweise Luft, für einen Trocknungstrichter, in dessen unteren Teil eine Zuluftleitung führt und der mit einer Abluftleitung verbunden ist, wobei die Abluftleitung über eine Reihenschaltung aus einer ersten Ventileinrichtung, einem Gebläse, einem Trockenmittel enthaltenden Trockenmittelbehälter, einer Heizung und einer Zweitventilanordnung mit der Zuluftleitung verbunden ist. Diese Vorrichtung ist aus der DE-A-2 354 745 bekannt.

Bei vielen Trocknungsvorgängen, z. B. der Trocknung von Kunststoff granulat mittels getrockneter Luft, ist es wünschenswert, daß der Trockenluftstrom ununterbrochen durch das zu trocknende Gut strömt. Deshalb besitzen Adsorptionsmitteltrockner üblicherweise zwei Gebläse, nämlich ein relativ großes Gebläse zur Förderung der Trockenluft und ein kleineres Gebläse, welches beispielsweise eine Fördermenge von etwa einem Drittel des Trockenluftmittel-Gebläses hat, welches zur Förderung der Regenerationsluft dient. Diese zwei Gebläse sind mit zwei mit Trockenmittel gefüllten Trockenluftbehältern verbunden, wobei wechselweise ein Trockenluftbehälter der Trocknung dient, während der zweite gleichzeitig regeneriert wird. Der Nachteil dieser Trockner liegt darin, daß sie aus relativ vielen verschiedenen elektrischen und mechanischen Einzelteilen bestehen, z. b. zwei verschieden großen Gebläsen mit unterschiedlichen elektrischen Steuersystemen. Dies macht eine Produktion teuer und kompliziert die Ersatzteilhaltung. Wenn ein einziges Teil seinen Dienst versagt, bleibt der Trockner ganz stehen. Schließlich liefert diese Art von Trockner immer nur eine Trockeluftmenge, die nicht an den Bedarf des in dem Trocknungstrichter enthaltenen, von der Trockenluft durchströmten und zu trocknenden Trocknungsgutes angepaßt werden kann.

Mit der Erfindung soll daher eine kostengünstigere und ausfallsicherere Vorrichtung der eingangs genannten Art geschaffen werden, bei der sich die für den Trocknungstrichter benötigte Luftmenge nach Bedarf bereitstellen läßt.

Bei der eingangs genannten Vorichtung ist dazu erfindungsgemäß vorgesehen, daß mehrere Baugruppen mit der Abluftleitung und der Zuluftleitung lösbar verbunden sind, wobei jede Baugruppe die Reihenschaltung aus erster Ventileinrichtung, Gebläse, Druckmittelbehälter, Heizung und zweite Ventileinrichtung enthält. Auf diese Weise kann der Trocknungsrichter unabhängig von der Regeneration des Trockenmittels in einer Baugruppe kontinuierlich mit dem erforderlichen Strom getrockneten Gases versorgt werden, so daß der Trocknungsprozeß im Trocknungsrichter weder durch eine Regenerierung des Trockenmittels noch durch Wartungsarbeiten oder Ausfall einer Baugruppe unterbrochen oder beeinflußt wird.

Zweckmäßig ist die Drehrichtung des Gebläses umschaltbar, wobei die erste und die zweite Ventileinrichtung aus je einem Paar von Rückschlagventilen bestehen und da Gebläse direkt mit dem Trockenmittelbehälter und der Trockenmittelbehälter direkt mit der Heizung verbunden sind.

Alternativ kann vortelhafterweise die erste und die zweite Ventileinrichtung aus je einem Wechselventil bestehen und die Heizung im Trockenmittelbehälter eingebaut sein. Eine besonders günstige Ausgestaltung dieser Ausführungsform besteht darin, daß die zweite Ventileinrichtung direkt mit der dem Gebläse gegenüberliegenden Seite des Trockenmittelbehälters verbunden ist. Gegebenenfalls kann der zweite Ventileinrichtung eine weitere Heizung nachgeschaltet sein.

Die Erfindung wird nachstehend anhand der in der beigefügten Zeichnung dargestellten Ausführungsbeispiele im einzelnen beschrieben. Es zeigen :

Fig. 1 eine erste Ausführung der Erfindung ; und

Fig. 2 eine zweite Ausführung der Erfindung.

Ein Trocknungstrichter 14 ist mit feuchtem Kunststoffgranulat gefüllt. Dies sinkt während der Trocknung in dem Trichter 14 zu seinem Ausgabeende 16 langsam nach unten. In den unteren Teil des Trocknungstrichters 14 führt eine Zuluftleitung 15, über die Trockenluft herangeführt wird. Die Trockenluft durchströmt das Granulat entgegen seiner Sinkrichtung und tritt am oberen Ende des Trocknungstrichters durch einen Abluftstutzen 19 aus. Der Abluftstutzen 19 ist mit einer Abluftleitung 17 verbunden, von der im dargestellten Ausführungsbeispiel drei Zweigleitungen abzweigen, welche je über einen Filter 41, 42, 43 und einem diesem nachgeschalteten Rückschlagventil 51, 52, 53 zu einem Gebläse 11, 12, 13 führt. Das Gebläse ist an einen Trockenmittelbehälter 27, 28, 29 angeschlossen, der mit Trockenmittel 21, 24 ; 22, 25 ; 23, 26 ; gefüllt ist. Dieses Trockenmittel kann aus einer Silikagelschicht und einem Molekularsieb bestehen. Dem Trockenmittelbehälter ist eine Heizeinrichtung 31, 32, 33 nachgeschaltet, die auf dem Trockenmittelbehälter 27, 28, 29 abgewandten Seite über eine Leitung 57, 58, 59 an eine Zuluftleitung 18 angeschlossen ist. Die Zuluftleitung 18 mündet über die Zuluftleitung 15 in den unteren Abschnitt des Trocknungstrichters 14. In die Leitung 57, 58, 59 ist ein weiteres Rückschlagventil 54, 55, 56 eingebaut.

Ferner führt von dem Leitungsabschnitt 44, 45, 46 zwischen dem Rückschlagventil 51, 52, 53 und dem Gebläse 11, 12, 13 eine Zweigleitung 64, 65, 66 über ein weiteres Rückschlagventil 61, 62, 63 ins Freie. Auch die Leitung 57, 58, 59 weist eine ins Freie führende Zweigleitung 74, 75, 76 zwischen dem Rückschlagventil 54, 55, 56 und der Heizeinrichtung 31, 32, 33 auf, welche ein Rückschlagventil 71, 72, 73 enthält.

Je ein Gebläse mit Trockenmittelbehälter, gegebenenfalls auch Heizeinrichtung, Filter und Rückschlagventilen sind zu einer austauschbaren Baugruppe 1, 2, 3 zusammengefaßt, die an die Rohrleitungen 17, 18 in nicht dargestellter weise lösbar angeschlossen ist. Die Rohrleitungen 17, 18 können mehr Verzweigungen als dargestellt besitzen, an die gegebenenfalls bei Bedarf mehrere Baugruppen 1, 2, 3 angeschlossen werden können. Bei Ausfall einer Baugruppe bleibt die Trockenleistung der übrigen Baugruppen erhalten. Ferner kann die ausgefallene Baugruppe leicht aus dem Trocknungskreislauf herausgenommen und durch eine andere gleichartige Baugruppe ersetzt werden. Schließlich können nur soviele Baugruppen an den Trocknungstrichter 14 über die Leitungen 17, 18 eingeschaltet werden, wie dem Trockenluftbedarf für den Trocknungstrichter 14 entspricht.

Während der Trocknungsphase beispielsweise der Baugruppe 1 fördert das Gebläse 11 Luft bei der in der Zeichnung gewählten Darstellung von der Leitung 44 zum Trockenmittelbehälter 27, wobei die Rückschlagventile 51 und 54 öffnen und die Rückschlagventile 61 und 71 schließen. Während der Regenerationsphase für das Trockenmittel 21, 24 wird die Drehrichtung des Gebläses 11 umgeschaltet, sodaß das Gebläse 11 Luft bei der in der Figur dargestellten Darstellung weise vom Trocknungsbehälter 27 in die Leitung 44 fördert. Bei dieser Strömungsrichtung schließen sich die Rückschlagventile 51 und 54 und es öffnen sich die Rückschlagventile 71 und 61. Dadurch wird Regenerationsluft aus dem Freien durch die Zweigleitung 74 über die Heizeinrichtung 31 vorgewärmt angesaugt, treibt die Feuchtigkeit aus dem Trockenmittel 21, 24 aus und entweicht über die Zweigleitung 64 ins Freie. Während der Trocknungsphase der Baugruppe 2 läuft das Gebläse 12 bei der gewählten Darstellungsweise im Gegensinn des Uhrzeigers, sodaß die Ventile 52 und 55 öffnen und die Ventile 62 und 72 schließen. Während der Regenerationsphase für das Trockenmittel 22, 25 wird die Drehrichtung des Gebläses 12 umgeschaltet, sodaß die Rückschlagventile 72 und 62 öffnen und die Rückschlagventile 52 und 55 schließen, sodaß Regenerationsluft aus dem Freien durch die Leitung 75 und die Heizung 32 durch den Trockenmittelbehälter 28 gesaugt und über den Stutzen 65 ins Freie entlassen wird. Entsprechend sind bei der Trocknungsphase der Baugruppe 3 die Rückschlagventile 53 und 56 geöffnet und die Rückschlagventile 63 und 73 geschlossen, wo hingegen bei der Regenerationsphase dieser Baugruppe die Rückschalgventile 53 und 56 aufgrund der Umkehr der Drehrichtung des Gebläses 13 schließen und die Ventile 73 und 63 öffnen, sodaß Regenerationsluft durch den Stutzen 76 angesaugt durch die Heizung 33 erwärmt, durch den Trockenmittelbehälter 29 hindurchgeleitet und über den Stutzen 66 ins Freie entlassen wird.

Da die Regenerationsphase wesentlich kürzer als die Trocknungsphase ist, kann die nicht dargestellte zentrale Steuerung der Vorrichtung beispielweise die Baugruppe 1 durch entsprechende Steuerung der Drehrichtung des Gebläses 11 auf Regeneration schalten und die Baugruppen 2 und 3 durch eine umgekehrte Drehrichtung der Gebläse 12 und 13 auf Trocknung der aus dem Trocknungstrichter 14 über die Leitung 17 angesaugtne Luft schalten. Wenn die Regeneration des Trockenmittels 21, 24 der Baugruppe 1 abgeschlossen ist, schaltet die zentrale Steuerung die Drehrichtung des Gebläses 11 und beispielsweise des Gebläses 12 um, sodaß die Baugruppe 1 Luft aus dem Trocknungstrichter 14 ansaugt und trocknet, während die Baugruppe 2 auf Regeneration geschaltet und von der Leitung 17 durch das Rückschlagventil 52 getrennt ist. Der Trocknungstrichter 14 erhält jetzt den gleichen Volumenstrom an Trockenluft wie vorher, da auch jetzt zwei Baugruppen, nämlich die Baugruppen 1 und 3 auf Trocknung geschaltet sind. Ist die Regenetion der Baugruppe 2 abgeschlossen, wird diese wieder in den Trocknungsprozess eingeschaltet und die Baugruppe 3 auf Regeneration geschaltet. Die Trocknung der Abluft aus dem Trocknungstrichter 14 besorgen dann wiederum 2 Baugruppen nämlich die Baugruppen 1 und 2. Man sieht, daß bei dem dargestellten Ausführungsbeispiel stets zwei Drittel der gesamten vorhandenen Trockenmittelmenge zur Trocknung zur Verfügung steht. Das bedeutet eine bessere Ausnutzung des Trockenmittels, sowie die konstante Bereitstellung eines gleichbleibenden Volumenstromes an Trockenluft.

Alternativ kann ein Regenerationstakt eines Trockenmittelbehälters auch immer erst dann begonnen werden, wenn die Adsorptionsfähigkeit des Trockenmittels erschöpft ist. Dies ist zum Beispiel bei der Adsorption von Wasserdampf aus Luft leicht durch kontinuierliche Überwachung des Taupunktes der aus einem Trockenmittelbehälter strömenden Luft feststellbar. Bei schwacher Wasserdampfbeladung des zu trocknenden Gases bedeutet dies, daß zeitweilig alle drei Trockenmittelbehälter auf Trocknung geschaltet sind, was sich positiv auf die erzeugte Trockenluftmenge auswirkt. Ferner wird die zur Regeneration erforderliche Energie eingespart, weil Trockenmittel nur dann getrocknet wird, wenn seine Trocknungsfähigkeit erschöpft ist.

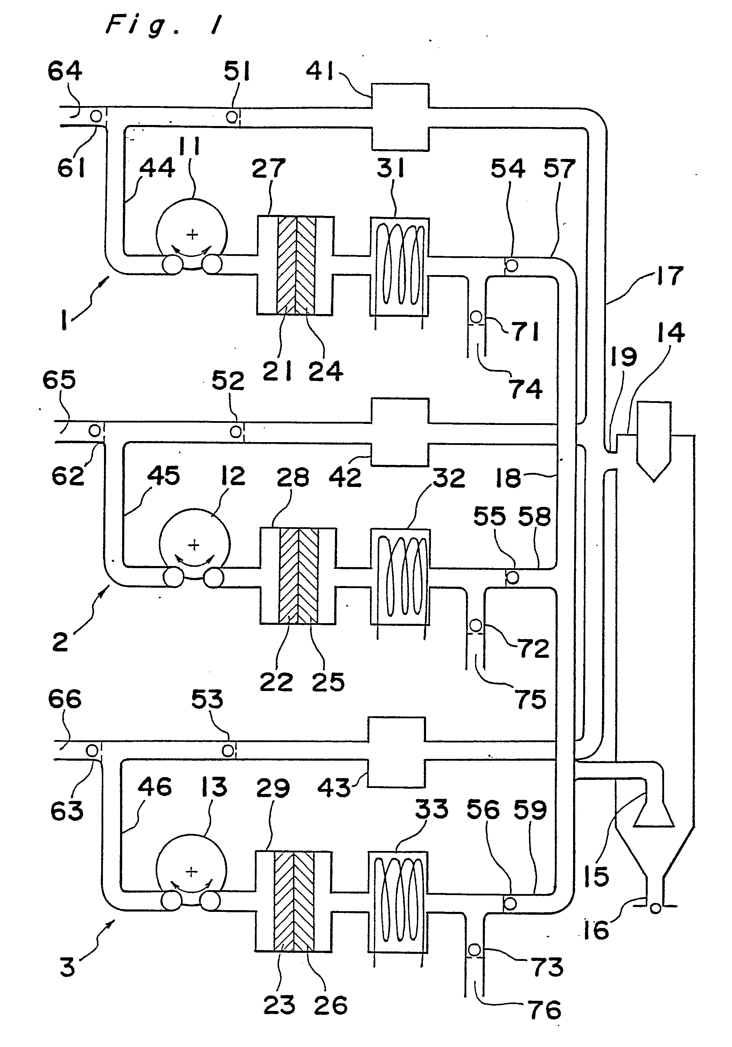

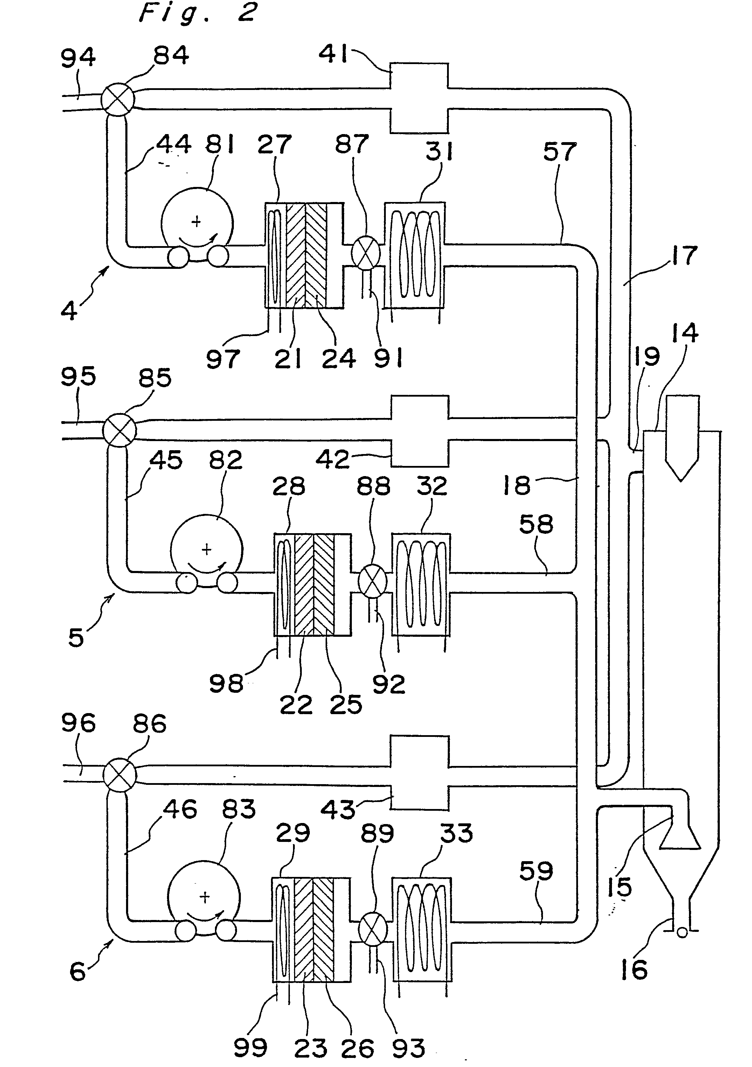

Figur 2 zeigt eine Ausführüngsform der Erfindung, bei der drei Baugruppen 4, 5, 6 an den Trocknungstrichter 14 angschlossen sind. Soweit sich aus nachstehendem nichts anderes ergibt, stimmt die in Figur 2 dargestellte Vorrichtung mit der anhand von Figur 1 beschriebenen Vorrichtung überein, und gleiche Bauteile sind in den beiden Figuren mit gleichen Bezugszeichen versehen.

Der wesentliche Unterschied der in Figur 2 dargestellten Vorrichtung zu der vorstehend beschriebenen besteht darin, daß in der Drehrichtung nicht umschaltbare Gebläse 81, 82, 83 in jeder der Baugruppen 4, 5, 6 enthalten und direkt mit dem Trockenmittelbehälter 27, 28, 29 verbunden sind. Ferner sind die Rückschlagventile entfallen und Wechselventile sowie je eine Zusatzheizung 97, 98, 99 vorgesehen.

In der Baugruppe 4 sitzt ein Wechselventil 84 in der Ansaugleitung 44 für das Gebläse 81 und kann je nach seiner Stellung die Ansaugleitung 44 entweder mit der vom Filter 41 herankommenden Leitung oder mit einer Ansaugleitung 94 für Regenerationsluft verbinden. Ein Wechselventil 87 sitzt in der den Trockenmittelbehälter 27 mit der Heizung 31 verbindenden Leitung und kann je nach seiner Stellung den Trockenmittelbehälter 27 mit der Heizung 31 oder mit einer Abluftleitung 91 für feuchte Regenerationsluft verbinden. Entsprechend sitzt bei der Baugruppe 5 das Wechselventil 85 in der Ansaugleitung 45 für das Gebläse 82 und kann diese entweder mit der vom Filter 42 herangeführten Leitung oder mit der Ansaugleitung 95 für Regenerationsluft verbinden. Entsprechend sitzt in der Ansaugleitung 46 des Gebläses 83 der Baugruppe 6 ein Wechselventil 86, das die Ansaugleitung 46 entweder mit der vom Filter 43 kommenden Leitung oder mit der Ansaugleitung 96 für Regenerationsluft verbindet. Entsprechend dem Wechselventil 87 ist in der Baugruppe 5 ein Wechselventil 88 zwischen Trockenmittelbehälter 28 und Heizung 32 eingeschaltet und kann den Trockenmittelbehälter 28 entweder mit der Heizung 32 oder mit einer Abluftleitung 92 für feuchte Regenerationsluft verbinden. Analog sitzt ein Wechselventil 89 in der Baugruppe 6 in der den Trockenmittelbehälter 29 mit der Heizung 33 verbindenden Leitung und kann den Trockenmittelbehälter 29 entweder mit der Heizung 33 oder mit einer Abluftleitung 93 für feuchte Regenerationsluft verbinden.

Die Trocknungsphase und die Regenerationsphase wird nur für die Baugruppe 4 beschrieben, der Verfahrensgang ergibt sich daraus analog für die Baugruppen 5 und 6. Während der Trocknungsphase der Baugruppe 4 sind die Wechselventile 84 und 87 so geschaltet, daß das Gebläse 81 feuchte Luft aus dem Trocknungstrichter 14 über den Filter 41 und die Ansaugleitung 44 ansaugt, die bei abgeschalteter Zusatzheizung 97 im Trockenmittelbehälter 27 getrocknet und nach Vorwärmung durch die Heizung 31 durch die Leitung 57 wieder dem Trocknungstrichter 14 zugeführt wird. Zur Einleitung der Regenerationsphase werden die Wechselventile 84 und 87 umgeschaltet, sodaß das Gebläse 81 aus dem Ansaugstutzen 94 Regenerationsluft über die Ansaugleitung 44 ansaugt, die von der eingeschalteten Zusatzheizung 97 erwärmt wird und die im Trockenmittelbehälter 27 enthalenen Trockenmittel 21 und 24 regeneriert und über das Wechselventil 87 und die Abluftleitung 91 ins Freie abgeführt wird.

Man erkennt, daß die mit der in Figur 1 dargestellten Vorrichtung erreichbaren Vorteile sich auch bei der Vorrichtung gemäß Figur 2 einstellen.

## Patentansprüche

1. Vorrichtung zur Erzeugung eines kontinuierlichen Stromes getrockneten Gases, vorzugsweise Luft, für einen Trocknungstrichter (14), in dessen unteren Teil eine Zuluftleitung (15) führt und der mit einer Abluftleitung (17) verbunden ist, wobei die Abluftleitung (17) über eine Reihenschaltung aus einer ersten Ventileinrichtung (51, 61), einem Gebläse (11), einem Trockenmittel enthaltenden Trockenmittelbehälter (27), einer Heizung (31) und einer zweiten Ventilanordnung (54, 71) mit der Zuluftleitung (18) verbunden ist, dadurch gekennzeichnet, daß mehrere Baugruppen (1, 2, 3 ; 4, 5, 6) mit der Abluftleitung (17) und der Zuluftleitung (18) lösbar verbunden sind, wobei jede Baugruppe die Reihenschaltung aus erster Ventileinrichtung, Gebläse, Trockenmittelbehälter, Heizung und zweite Ventileinrichtung enthält.

2. Vorrichtung nach Anspruch 1, dadurch gekennzeichnet, daß die Drehrichtung des Gebläses (11, 12, 13) umschaltbar ist, die erste und die zweite Ventileinrichtung aus je einem Paar von Rückschlagventilen (51, 61 ; 71, 54 ; 52, 62 ; 55, 72 ; 53, 63 ; 56, 73) bestehen, und daß das Gebläse direkt mit dem Trockenmittelbehälter und der Trockenmittelbehälter direkt mit der Heizung verbunden sind.

3. Vorrichtung nach Anspruch 1, dadurch gekennzeichnet, daß die erste und zweite Ventileinrichtung aus je einem Wechselventil (84, 87 ; 85, 88 ; 86, 89) bestehen, und daß die Heizung (97, 98, 99) im Trockenmittelbehälter (27, 28, 29) eingebaut ist.

4. Vorrichtung nach Anspruch 3, dadurch gekennzeichnet, daß die zweite Ventileinrichtung (87, 88, 89) direkt mit der dem Gebläse (81, 82, 83) gegenüberliegenden Seite des Trockenmittelbehälters (27, 28, 29) verbunden ist.

5. Vorrichtung nach Anspruch 3 oder 4, dadurch gekennzeichnet, dan der zweiten Ventileinrichtung (87, 88, 89) eine weitere Heizung (31, 32, 33) nachgeschaltet ist.

## Claims

1. Apparatus for producing a continuous stream ot dried gas, preferably air, for a drying hopper (14), into the lower portion of which leads an air feed conduit (15) and which is connected to an air discharge conduit (17), wherein the air discharge conduit (17) is connected to the air feed conduit (18) by way of a series circuit comprising a first valve means (51, 61), a fan (11), a drying agent container (27) containing drying agent, a heating means (31) and a second valve arrangement (54, 71), characterised in that a plurality of structural groups (1, 2, 3 ; 4, 5, 6) are releasably connected to the air discharge conduit (17) and the air feed conduit (18), wherein each structural group contains the series circuit of the first valve means, the fan, the drying agent container, the heating means and the second valve means.

2. Apparatus according to claim 1 characterised in that the direction of rotation of the fan (11, 12, 13) can be reversed, the first and second valve means each comprise a pair of non-return valves (51, 61 ; 71, 54 ; 52, 62 ; 55, 72 ; 53, 63 ; 56, 73), and that the fan is directly connected to the drying agent container and the drying agent container is directly connected to the heating means.

3. Apparatus according to claim 1 characterised in that the first and second valve means comprise a respective change-over valve (84, 87 ; 85, 88 ; 86, 89) and that the heating means (97, 98, 99) is installed in the drying agent container (27, 28, 29).

4. Apparatus according to claim 3 characterised in that the second valve means (87, 88, 89) is directly connected to the side of the drying agent container (27, 28, 29) in opposite relationship to the fan (81, 82, 83).

5. Apparatus according to claim 3 or claim 4 characterised in that a further heating means (31, 32, 33) is disposed downstream of the second valve means (87, 88, 89).

## Revendications

1. Dispositif pour produire un courant continu de gaz séché, de préférence d'air, pour une trémie de séchage (14) dans la partie inférieure de laquelle débouche une conduite d'arrivée d'air (15) et qui est reliée à une conduite de sortie d'air (17), la conduite de sortie d'air (17) étant reliée à la conduite d'arrivée d'air (18) par l'intermédiaire d'un montage en série composé d'un premier système de valves (51, 61), d'une soufflante (11), d'un réservoir d'agent séchant (27) contenant de l'agent séchant, d'un chauffage (31) et d'un second agencement de valves (54, 71), caractérisé en ce que plusieurs blocs de construction (1, 2, 3 ; 4, 5, 6) sont reliés de manière détachable à la conduite de sortie d'air (17) et à la conduite d'arrivée d'air (18), chaque bloc de construction comprenant le montage en série constitué du premier système de valves, de la soufflante, du réservoir d'agent de pression, du chauffage et du second système de valves.

2. Dispositif conforme à la revendication 1, caractérisé en ce que le sens de rotation de la soufflante (11 12, 13) est inversable, le premier et le second systèmes de valves étant constitués chacun d'une paire de valves anti-retour (51, 61 ; 71, 54 ; 52, 62 ; 55, 72 ; 53, 63 ; 56, 73), et en ce que la soufflante est reliée directement au réservoir d'agent séchant et le réservoir d'agent séchant est relié directement au chauffage.

3. Dispositif conforme à la revendication 1, caractérisé en ce que le premier et le second systèmes de valves sont constitués chacun d'une valve à deux voies (84, 87 ; 85, 88 ; 86, 89), et en ce que le chauffage (97, 98, 99) est intégré au réservoir d'agent séchant (27, 28, 29).

4. Dispositif conforme à la revendication 3, caractérisé en ce que le second système de valves (87, 88, 89) est relié directement au côté du réservoir d'agent séchant (27, 28, 29) opposé à la soufflante (81, 82, 83).

5. Dispositif conforme à la revendication 3 ou 4, caractérisé en ce qu'en aval du second système de valves (87, 88, 89) est implanté un autre chauffage (31, 32, 33).

*Fig. 1*

Fig. 2

0 162 140